# EUROPEAN PATENT APPLICATION

(11) **EP 3 998 427 A1**
(43) Date of publication of application: **18.05.2022**
(21) Application number: 19941850.0
(22) Date of filing: 04.12.2019
(51) Int. Cl.: F24C 7/08, F24C 7/00

(54) **INDUCTION COOKTOP AND CONTROL METHOD FOR INDUCTION COOKTOP**

(30) Priority: 19.08.2019 CN 201910766188
(71) Applicant: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: YIN, Kunren, Foshan, Guangdong 528311 (CN); LIAO, Hui, Foshan, Guangdong 528311 (CN)
(74) Representative: Whitlock, Holly Elizabeth Ann
(86) International application number: PCT/CN2019/123033
(87) International publication number: WO 2021/031453

(57) **Abstract**

An induction cooktop (201) and a control method for the induction cooktop (201). The induction cooktop (201) comprises: a processing module, a power supply module and at least one heating module (204); the power supply module is configured to supply power to the heating module (204); the heating module (204) comprises: a heating circuit configured to heat a pot (205) and a detection circuit connected to the heating circuit; and the processing module is configured to acquire a parameter value of a signal collection point of the detection circuit, determine, according to the parameter value, whether the pot (205) is placed on the heating module (204), and control the heating circuit to heat the pot (205) if it is determined that the pot (205) is placed on the heating module (204), so as to provide a high heating efficiency.

## Description

### CROSS-REFERENCE TO RELATED APPLICATION

This application is based upon and claims priority to Chinese Patent Application No. 201910766188.3, filed on August 19, 2019, the contents of which are incorporated herein by reference in its entirety.

### TECHNICAL FIELD

The present application relates to the household electrical appliances and in particular to an induction cooktop and a method for controlling an induction cooktop.

### BACKGROUND

There are various kitchen appliances or kitchen utensils for cooking or heating, such as induction cookers, rice cookers, electric pots, etc. on the existing cooktop. In order to use the kitchen appliances or kitchen utensils, it is necessary to arrange a large number of power strips on the cooktop, which can be simultaneously used by these kitchen appliances.

When multiple devices are simultaneously used, the wires of these devices are staggered, causing annoyance for the user during use of the devices. Moreover, due to these wires, safety hazards may exist in the kitchen during cleaning. In addition, the devices are not easily stored.

Since the conventional induction cooker has only one coil disk, the detection techniques are implemented by means of a single pulse. However, in the application scenario of the full-surface type of induction cooktop, due to a large number of coil disks, the conventional detection and identification methods are costly. Moreover, at this stage, the pot must be placed at the designated location to be heated by the induction cooker, which affects the customer's experience.

### SUMMARY

In order to solve the above technical problems, embodiments of the present application provide an induction cooktop and a method for controlling an induction cooktop.

To achieve the above objects, the technical solutions of the present application are realized as follows.

An embodiment of the present application provides an induction cooktop. The induction cooktop includes a processing module, a power supply module and at least one heating module.

The power supply module is configured to supply power to the heating module.

The heating module includes a heating circuit configured to heat a pot, and a detection circuit connected to the heating circuit.

The processing module is configured to acquire a parameter value at a signal collection point in the detection circuit, to determine whether a pot is placed on the heating module according to the parameter value, and to control the heating circuit to heat the pot in response to determining that the pot is placed on the heating module.

In the above solution, the heating circuit includes a switching element and an inductor.

The processing module is configured to control the switching element to connect the inductor to the power supply module in response to determining that a pot is placed on the heating module, so that the pot is heated by the inductor.

In the above solution, the processing module is configured to collect a voltage value at the signal collection point in the detection circuit, and to determine whether a pot is placed on the heating module according to the voltage value.

In the above solution, the processing module is configured to determine that a pot is placed on the heating module in response to determining that the voltage value exceeds a first threshold, and to control the heating module to heat the pot.

In the above solution, the switching element includes a relay, and the relay includes a first port, a second port and a third port. The first port is connected to the inductor, the second port is connected to the detection circuit, and the third port is connected to a third port of a relay of another heating module and to the power supply module.

The processing module is configured to control the first port of the switching element to be connected to the third port.

In the above solution, the heating circuit includes a resonance unit, and the resonance unit includes a capacitor connected to the inductor.

An embodiment of the present application provides a method for controlling an induction cooktop as any of the above-mentioned induction cooktops. The method for controlling the induction cooktop includes the following operations.

A parameter value at a signal collection point in the detection circuit is acquired by the processing module, and it is determined by the processing module whether a pot is placed on the heating module according to the parameter value. The heating circuit is controlled by the processing module to heat the pot in response to determining that the pot is placed on the heating module.

In the above solution, the heating circuit includes a switching element and an inductor.

The operation that the heating circuit is controlled to heat the pot includes the following operation.

The switching element is controlled to connect the inductor to the power supply module, so that the pot is heated by the inductor.

In the above solution, the operations that the parameter value at the signal collection point in the detection circuit is acquired by the processing module and it is determined by the processing module whether a pot is placed on the heating module according to the parameter value include the following operations.

A voltage value at the signal collection point in the detection circuit is collected by the processing module, and it is determined by the processing module whether a pot is placed on the heating module according to the voltage value.

In the above solution, the operation that it is determined whether a pot is placed on the heating module according to the voltage value includes the following operation.

It is determined that a pot is placed on the heating module in response to determining that the voltage value exceeds a first threshold.

The embodiments of the present application provide an induction cooktop and a method for controlling an induction cooktop. The induction cooktop includes a processing module, a power supply module and at least one heating module. The power supply module is configured to supply power to the heating module. The heating module includes a detection circuit and a heating circuit for heating a pot. The processing module is configured to acquire a parameter value in the detection circuit, to determine whether a pot is placed on the heating module according to the parameter value, and to control the heating circuit to heat the pot in response to determining that the pot is placed on the heating module. Thus, in the solutions of the embodiments of the present application, the processing module may dynamically detect the position of the load on the heating module, and determine the change in the position of the load in real time, etc. The processing module may determine the parameter value at the signal collection point while detecting the position, and determine whether a pot is placed according to the parameter value, so that the heating module is instantly controlled, thereby increasing the heating efficiency.

### BRIEF DESCRIPTION OF THE DRAWINGS

FIG. 1 is a schematic diagram of an induction cooktop according to an embodiment of the present application.
FIG. 2 is a schematic diagram of a power transmission table of another induction cooktop according to an embodiment of the present application.
FIG. 3 is a schematic diagram of a circuit of a heating module according to an embodiment of the present application.
FIG. 4 is a schematic diagram of a circuit of another heating module according to an embodiment of the present application.
FIG. 5 is a schematic diagram of a circuit of still another heating module according to an embodiment of the present application.
FIG. 6 is a schematic diagram of a circuit of yet another heating module according to an embodiment of the present application.
FIG. 7 is a schematic diagram showing a proportional relationship between voltage amplitude at a signal collection point and amplitude of an excitation source AC according to an embodiment of the present application.
FIG. 8 is a schematic diagram of use of an induction cooktop according to an embodiment of the present application.
FIG. 9 is a flow chart of a method for controlling an induction cooktop according to an embodiment of the present application.

### DETAILED DESCRIPTION

In order to make the purpose, technical solutions and advantages of the embodiments of the present application clearer, the technical solutions of the embodiments of the present application will be described clearly and completely in conjunction with the accompanying drawings of the embodiments of the present application. Apparently, the described embodiments are a part of the embodiments of the present application, rather than all of the embodiments of the present application. Based on the described embodiments of the present application, all of the other embodiments obtained by those skilled in the art belong to the protection scope of the present application.

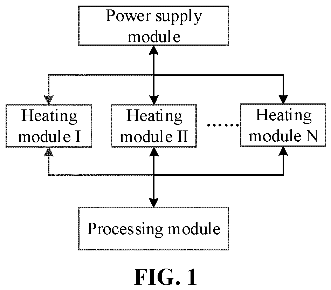

FIG. 1 is a schematic diagram of an induction cooktop according to an embodiment of the present application. As shown in FIG. 1, the induction cooktop includes a processing module, a power supply module and at least one heating module The number of the heating module may be one or more (each heating module may correspondingly have a unique number to enable the processing module to distinguish the heating modules from each other).

The power supply module is configured to supply power to the heating module.

The heating module includes a heating circuit configured to heat a pot, and a detection circuit connected to the heating circuit.

Specifically, for each heating module, the heating module may include a heating circuit and a detection circuit. The heating circuit is configured to heat a pot on the heating module. The detection circuit is connected to the heating circuit and is configured to detect the state of the heating circuit, specifically the state of an inductor of the heating circuit.

The processing module is configured to acquire a parameter value at a signal collection point in the detection circuit, to determine whether a pot is placed on the heating module according to the parameter value, and to control the heating circuit to heat the pot in response to determining that a pot is placed on the heating module.

Specifically, the heating circuit includes a switching element and an inductor.

The processing module is specifically configured to control the switching element to connect the inductor to the power supply module in response to determining that a pot is placed on the heating module, so that the pot is heated by the inductor. That is, the pot is heated.

Specifically, the processing module is configured to collect a voltage value at the signal collection point in the detection circuit, and to determine whether a pot is placed on the heating module according to the voltage value.

Specifically, the processing module may determine whether an object is placed on the heating module according to the voltage value at the signal collection point, and may determine whether the object is a pot according to the specific voltage value in response to determining that an object is placed on the heating module. The processing module may control the switching element to connect the inductor to the power supply module in response to determining that a pot is placed on the heating module, so that the pot is heated by the inductor.

It should be noted that when the induction cooktop is designed, the connection relationship between the heating circuit and the detection circuit as well as the parameter value of each device in the circuit can be predetermined, and the inductance value of the inductor can be determined according to the voltage value. That is, the voltage value reflects the change in the inductance value of the inductor. The developers can precalculate a first threshold. In practical application, when it is determined that the voltage value exceeds the first threshold, it is indicated that a pot is placed on the heating module. To further illustrate, during heating, the inductor for heating the pot can be equivalent to a resistor and an inductor connected in series. In a case that the placed objects are different from each other and the areas of the contact surfaces between the objects and the heating module are different from each other, the inductance values are different, and thus the voltage values are different. Based on the above principle, it can be determined whether an object is placed on the heating module and whether the object is a pot according to the voltage value.

In this embodiment, the switching element includes a relay, and the relay includes a first port, a second port and a third port.

The first port is connected to the inductor, the second port is connected to the detection circuit, and the third port is connected to a third port of a relay of another heating module and to the power supply module.

The heating circuit may also include a resonance unit. The resonance unit specifically includes a capacitor connected to the inductor.

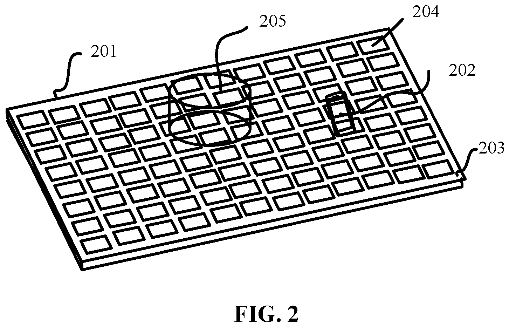

FIG. 2 is a schematic diagram of a power transmission table of another induction cooktop according to an embodiment of the present application. As shown in FIG. 2, the induction cooktop 201 includes a plurality of heating modules 204. The load to be heated (such as a pot 205) and a cell phone 202 can be placed on the power transmission table 203 of the induction cooktop.

The above-mentioned heating modules may adopt the same structure as the heating module shown in FIG. 1, which is not repeated herein. The induction cooktop also includes a processing module. The processing module is configured to determine a parameter value at a signal collection point in the detection circuit of the heating module, in particular a voltage value at the signal collection point, to determine whether an object is placed on the heating module according to the voltage value, and to further determine whether the object is a pot in response to determining that the object is placed on the heating module.

Herein, according to the magnitude of the voltage value, it can be determined that the object is a pot (in a case that the voltage value exceeds the first threshold, it is indicated that the object is a pot), such as a pot 205, or the object is another object (in a case that the voltage value does not exceed the first threshold, it is indicated that the object is not a pot), such as a cell phone 204. The object is heated if it is indicated that the object is a pot 205, and the object is not heated if it is indicated that the object is a cell phone 204.

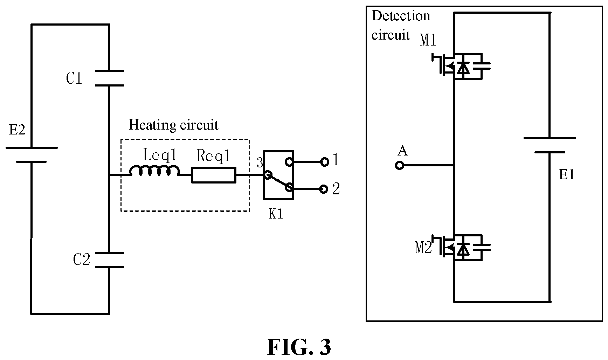

FIG. 3 is a schematic diagram of a circuit of a heating module according to an embodiment of the present application. As shown in FIG. 3, the heating module includes a heating circuit and a detection circuit. The heating circuit is equivalent to an inductor and a resistor during heating, such as an inductor Leq1 and a resistor Req1 as shown in FIG. 3. The heating circuit further includes a switching element.

The detection circuit includes a first component M1, a second component M2 and a battery E1. The structure of the first component M1 may be the same as the structure of the second component M2, specifically including a diode, a capacitor, a MOS transistor (in particular an N-channel MOS transistor). Each of both ends of the capacitor is connected to a respective one of both ends of the diode. The D pole of the MOS transistor is connected to one of both ends of the diode, and the S pole of the MOS transistor is connected to the other one of both ends of the diode.

Herein, the switching element is a relay K1, in particular a single pole multiple throw relay. The third port 3 of the single pole multiple throw relay is connected to the inductor. The first port 1 of the single pole multiple throw relay is connected to the power supply module. The second port 2 of the single pole multiple throw relay is connected to the detection circuit, in particular to a middle point between the first component and the second component, i.e. point A.

By default, the detection circuit is connected to the second port 2 of the relay K1, and the third port 3 of the relay K1 is connected to the second port 2. When it is determined by the processing module that a pot is placed on the heating module, the third port 3 of the relay K1 is controlled to be connected to the first port 1, thereby forming a power supply circuit. The power supply module supplies power to the heating module, so that the pot is heated by the heating module.

In FIG. 3, the heating circuit may also include a battery E2, a capacitor C1 and a capacitor C2 (as a resonance unit) sequentially connected to each other. The inductor Leq1 is connected to a node between the capacitor C1 and the capacitor C2.

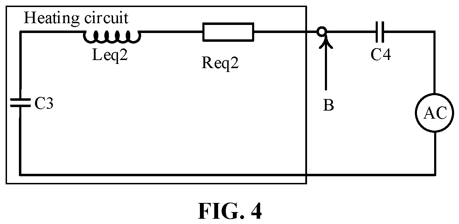

FIG. 4 is a schematic diagram of a circuit of another heating module according to an embodiment of the present application. As shown in FIG. 4, it is assumed here that the relay K1 is connected to the detection circuit by default, that is, the heating circuit is connected to the detection circuit. The detection circuit here includes a capacitor C4 and a given excitation source AC. The heating circuit is equivalent to an inductor Leq2 and a resistor Req2. The signal collection point in the detection circuit is a point between the heating circuit and the detection circuit. Specifically, the signal collection point refers to a point between the resistor Req2 and the capacitor C4, i.e. point B. The heating circuit may also include a capacitor C3, which serves as a resonance unit.

Herein, the inductor Leq2 and the resistor Req2 may be respectively understood as the inductor Leq1 and the resistor Req1 as shown in FIG. 3. That is, the inductor Leq 2 and the resistor Req2 are the inductor and the resistor to which the heating circuit is equivalent to during heating.

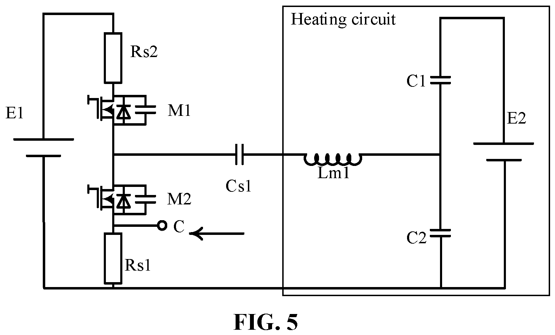

FIG. 5 is a schematic diagram of a circuit of still another heating module according to an embodiment of the present application. As shown in FIG. 5, the heating circuit includes a inductor Lm1. The inductor Lm1 is connected to the detection circuit through a capacitor Cs1. Herein, the detection circuit includes a first component M1, a second component M2 and a resistor (including a resistor Rs1 and a resistor Rs2), and further includes a battery E1 for supplying power.

Specifically, the inductor Lm1 is in particular connected to the middle point between the first component M1 and the second component M2 of the detection circuit through the capacitor Cs1. The signal collection point in the detection circuit is the middle point between the second component M2 and the resistor Rs1, i.e. point C.

The heating circuit may also include a battery E2, a capacitor C1 and a capacitor C2 (the capacitor here may serve as a resonance unit) sequentially connected to each other. The inductor Lm1 is connected to a node between the capacitor C1 and the capacitor C2.

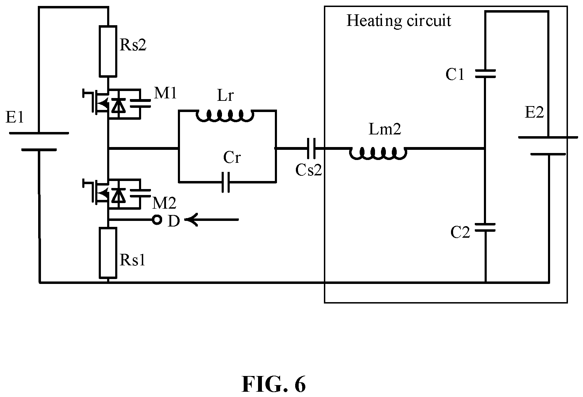

FIG. 6 is a schematic diagram of a circuit of yet another heating module according to an embodiment of the present application. As shown in FIG. 6, the heating circuit includes a inductor Lm2. The inductor Lm2 is connected to the detection circuit through a capacitor Cs2. The detection circuit includes an inductor Lr and a capacitor Cr connected in parallel. The detection circuit also includes a first component M1, a second component M2 and a resistor Rs (including a resistor Rs1 and a resistor Rs2), and a battery E1. The signal collection point in the detection circuit is the middle point between the second component M2 and the resistor Rs1, i.e. point D.

The structure of each of the first component and the second component shown in FIG. 5 and FIG. 6 may be the same as the structure of each of the first component and the second component shown in FIG. 3, which is not repeated herein.

In FIG. 6, the heating circuit may also include a battery E1, a capacitor C1 and a capacitor C2 (as a resonance unit) sequentially connected to each other. The inductor Lm1 is connected to a node between the capacitor C1 and the capacitor C2.

It should be noted that in the above FIGS. 3, 4, 5, and 6, the detection circuit includes a processing module for acquiring a parameter value at the signal collection point. A first threshold is stored in the processing module (for different circuit structures and different devices, the first threshold may be different, but the principle that it is determined by the processing module according to the first threshold whether a pot is placed on the heating module is the same). The processing module is configured to collect the parameter value (specifically referring to the voltage value) at the signal collection point, to determine whether a pot is placed on the heating module according to the voltage value and the first threshold, and to control heating, as particularly shown in the processing module in FIG. 1, which is not repeated herein.

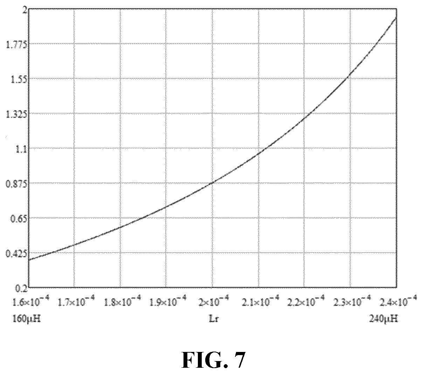

FIG. 7 is a schematic diagram showing a proportional relationship between voltage amplitude at a signal collection point and amplitude of an excitation source AC according to an embodiment of the present application. As shown in FIG. 7, in different situations, for example a pot is placed on the heating module, no pot is placed on the heating module or the sizes and distances of the pots are different from each other, the equivalent inductance and resistance in the heating circuit may both change, so as to affect the magnitude of the impedance of the heating circuit, so that the voltage at the signal collection point (such as point A in FIG. 3, point B in FIG. 4, point C in FIG. 5, point D in FIG. 6) may change. Based on a concrete heating circuit, the value of the equivalent inductance can be calculated according to the value of the voltage at the signal collection point, so that the position and the magnitude of the load may be determined. When the induction cooktop is powered, the induction cooktop can automatically detect and identify the type and the size of each means or device on the cooktop. In a case that the calculated equivalent inductance is greater than the inductance in the absence of a pot, the type of the load is a power transmission device, and the greater the inductance value, the smaller the distance between the load and the corresponding independent heating or power transmission module. In a case that the calculated equivalent inductance is less than the inductance in the absence of a pot, the load is in a state wherein the pot is present, and the smaller the inductance value, the smaller the distance between the pot and the corresponding independent heating or power transmission module, and the larger the area covering the independent heating or power transmission module.

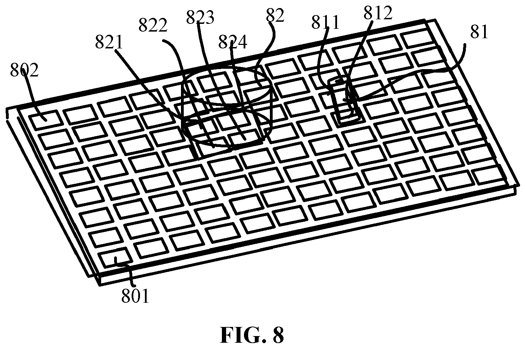

FIG. 8 is a schematic diagram of use of an induction cooktop according to an embodiment of the present application. As shown in FIG. 8, the induction cooktop includes a plurality of heating modules, such as heating modules 801, 802. All the heating modules can be numbered according to certain rules, so that the processing module may determine whether a pot is placed on each heating module according to the parameter value at the signal collection point of each heating module, and control each heating module.

Referring to FIG. 8, for the pot 82, the heating module 821, the heating module 822, the heating module 823 and the heating module 824 are involved. For the cell phone 81, the heating module 811 and the heating module 812 are involved.

The processing module may collect the parameter value (specifically referring to the voltage value at the signal collection point) at the signal collection point in the detection circuit of each heating module, and determine whether a pot is placed on the corresponding heating module according to the voltage value.

Referring to FIG. 8, the processing module may detect that the voltage value at the signal collection point in the detection circuit of each of the heating module 821, the heating module 822, the heating module 823 and the heating module 824 exceeds a first threshold, so that it can be determined by the processing module that a pot is placed on the heating module. In this case, the processing module controls the switching element of the above-mentioned heating module to connect the heating circuit to the power supply module, so that the pot is heated by the heating circuit.

For the heating module 811 and the heating module 812, although the processing module may detect the change in the voltage value at its signal collection point, the voltage value does not exceed the first threshold, so that it is determined by the processing module that although there is a load placed on the heating module, the load is not a pot. Thus, the processing module will not control the switching element to change its state, that is, the other placed loads will not be heated.

It should be noted that the capacitor, the resistor, the first component and the second component involved in each circuit in the above-mentioned FIGS. 3, 4, 5 and 6 are only as an embodiment, rather than a limitation to the circuit. Other components may also be adopted, as long as the solution of this embodiment can be implemented.

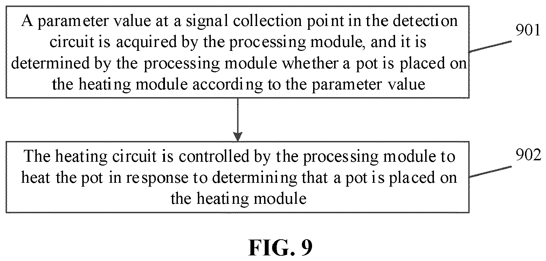

FIG. 9 is a flow chart of a method for controlling an induction cooktop according to an embodiment of the present application. As shown in FIG. 9, the induction cooktop adopts the induction cooktop shown in any one of the above-mentioned figures. The method for controlling the induction cooktop includes the following operations.

In operation 901, a parameter value at a signal collection point in the detection circuit is acquired by the processing module, and it is determined by the processing module whether a pot is placed on the heating module according to the parameter value.

In operation 902, the heating circuit is controlled by the processing module to heat the pot in response to determining that the pot is placed on the heating module.

Specifically, the heating circuit includes a switching element and an inductor.

The operation that the heating circuit is controlled to heat the pot includes the following operation.

The switching element is controlled to connect the inductor to the power supply module, so that the pot is heated by the inductor.

Specifically, the operations that the parameter value at the signal collection point in the detection circuit is acquired by the processing module, and it is determined by the processing module whether the pot is placed on the heating module according to the parameter value include the following operations.

A voltage value at the signal collection point in the detection circuit is collected by the processing module, and it is determined by the processing module whether a pot is placed on the heating module according to the voltage value.

Specifically, the operation that it is determined whether a pot is placed on the heating module according to the voltage value includes the following operation.

It is determined that a pot is placed on the heating module in response to determining that the voltage value exceeds a first threshold.

Specifically, the switching element includes a relay, and the relay includes a first port, a second port and a third port. The first port is connected to the inductor, the second port is connected to the detection circuit, and the third port is connected to a third port of a relay of another heating module and to the power supply module.

The operation that the heating circuit is controlled to heat the pot includes the following operation.

The first port of the switching element is controlled to be connected to the third port.

Specifically, the processing module sends the control signal to the switching element to control the first port of the switching element to be connected to the third port, so that the switching element connects the heating circuit to the power supply module.

The above only describes the preferred embodiments of the present application, and is not intended to limit the protection scope of the present application. Any modifications, equivalent substitution, improvements made within the spirit and principle of the present application shall be contained within the protection scope of the present application.

## Claims

1. An induction cooktop, comprising: a processing module, a power supply module and at least one heating module,
wherein the power supply module is configured to supply power to the heating module;
wherein the heating module comprises a heating circuit configured to heat a pot, and a detection circuit connected to the heating circuit; and
wherein the processing module is configured to acquire a parameter value at a signal collection point in the detection circuit, to determine whether a pot is placed on the heating module according to the parameter value, and to control the heating circuit to heat the pot in response to determining that the pot is placed on the heating module.

2. The induction cooktop of claim 1, wherein the heating circuit comprises a switching element and an inductor, and
wherein the processing module is configured to control the switching element to connect the inductor to the power supply module in response to determining that a pot is placed on the heating module, so that the pot is heated by the inductor.

3. The induction cooktop of claim 1, wherein the processing module is configured to collect a voltage value at the signal collection point in the detection circuit, and to determine whether a pot is placed on the heating module according to the voltage value.

4. The induction cooktop of claim 3, wherein the processing module is configured to determine that a pot is placed on the heating module in response to determining that the voltage value exceeds a first threshold, and to control the heating module to heat the pot.

5. The induction cooktop of claim 2, wherein the switching element comprises a relay, and the relay comprises a first port, a second port and a third port; wherein the first port is connected to the inductor, the second port is connected to the detection circuit, and the third port is connected to a third port of a relay of another heating module and to the power supply module; and
wherein the processing module is configured to control the first port of the switching element to be connected to the third port.

6. The induction cooktop of claim 2, wherein the heating circuit further comprises a resonance unit, and the resonance unit comprises a capacitor connected to the inductor.

7. A method for controlling an induction cooktop according to any one of claims 1 to 6, comprising:
acquiring, by the processing module, a parameter value at a signal collection point in the detection circuit, and determining, by the processing module, whether a pot is placed on the heating module according to the parameter value; and controlling, by the processing module, the heating circuit to heat the pot in response to determining that the pot is placed on the heating module.

8. The method of claim 7, wherein the heating circuit comprises a switching element and an inductor,
wherein controlling the heating circuit to heat the pot comprises:
controlling the switching element to connect the inductor to the power supply module, so that the pot is heated by the inductor.

9. The method of claim 7, wherein acquiring, by the processing module, the parameter value at the signal collection point in the detection circuit, and determining, by the processing module, whether a pot is placed on the heating module according to the parameter value, comprises:
collecting, by the processing module, a voltage value at the signal collection point in the detection circuit, and determining, by the processing module, whether a pot is placed on the heating module according to the voltage value.

10. The method of claim 9, wherein determining whether a pot is placed on the heating module according to the voltage value comprises:
determining that a pot is placed on the heating module in response to determining that the voltage value exceeds a first threshold.
